# EUROPÄISCHE PATENTSCHRIFT

(11) **EP 0 850 808 B1**
(45) Veröffentlichungstag und Bekanntmachung des Hinweises auf die Patenterteilung: **30.06.1999**
(21) Anmeldenummer: 97118935.2
(22) Anmeldetag: 30.10.1997
(51) Int. Cl.: B60R 21/13

(54) **Überrollschutzsystem für einen Personenkraftwagen**
Roll over device for a vehicle
Arceau de sécurité pour véhicule

(30) Priorität: 06.12.1996 DE 19650593
(43) Veröffentlichungstag der Anmeldung: 01.07.1998
(73) Patentinhaber: Bayerische Motoren Werke Aktiengesellschaft, 80788 München (DE)
(72) Erfinder: Hehl, Olaf, 80939 München (DE); Premm, Günther, 85591 Vaterstetten (DE)

(56) Entgegenhaltungen:
- EP-A- 0 623 492
- DE-A- 3 822 461

## Beschreibung

Die Erfindung bezieht sich auf ein Überrollschutzsystem für einen Personenkraftwagen, insbesondere für ein Cabriolet, nach dem Oberbegriff des Patentanspruches 1.

Derartige Überrollschutzsysteme sind schon mehrfach bekannt. Bei dem System nach der DE 39 30 171 C2 und der EP 0 456 646 B1 ist der Überrollbügel in der Rückenlehne angeordnet und verläuft in Ruhestellung mit seiner oberen äußeren Kontur bündig zu der angrenzenden Kontur der Kopfstütze. In beiden Fällen wird bei einem Überschlag der Überrollschutzkörper bzw. der Überrollbügel über die tragende Struktur der Rückenlehne gegenüber dem Fahrzeugaufbau abgestützt. Einerseits spart dies Bauraum, da nicht nur die Kopfstütze, sondern auch der Überrollbügel durch Integration in die Sitzlehne nicht eigens im Fahrzeug untergebracht und gegenüber diesem abgestützt werden müssen. Andererseits ist aber für den Sitz selbst an den Verstell-Schienen, in den Verstellgelenken und -motoren sowie an seiner Tragstruktur ein beträchtlicher Aufwand erforderlich.

Aus der EP 0 407 741 A2 und der EP 0 439 565 B1 ist es weiterhin bekannt, am Überrollbügel in seinem obersten Abschnitt eine zusätzliche Polsterung anzubringen, die als Kopfstütze dient.

Aus der DE 38 22 461 C2, die dem Oberbegriff des Anspruchs 1 entspricht, ist es schließlich noch bekannt, eine höhenverlagerbare Kopfstütze höhenverschiebbar an den Schenkeln eines U-förmigen Überrollbügels anzuordnen und abzustützen.

Der Erfindung liegt die Aufgabe zugrunde, eine ansprechende Anordnung eines Überrollbügels und einer Kopfstütze in einem Personenkraftwagen anzugeben, die darüber hinaus wenig Bauraum beansprucht und trotzdem eine hohe Funktionssicherheit sowohl des Überrollbügels als auch der Kopfstütze ermöglicht.

Diese Aufgabe wird erfindungsgemäß durch die im Patentanspruch 1 angegebenen Merkmale gelöst.

Weitere vorteilhafte Ausgestaltungen der Erfindung sind Gegenstand der Unteransprüche.

Dadurch, daß der Überrollbügel mit seinem oberen Abschnitt in die Ausnehmung der Kopfstütze eintaucht, ist einerseits eine besonders raumsparende Unterbringung geschaffen, denn er kann sehr nahe hinter dem Tragkörper und der Polsterung der Kopfstütze plaziert werden. Das Vorhandensein eines Überrollbügels ist von außen nicht sichtbar. Es sind auch keine gesonderten Abdeckungen in der Verkleidung in der vom Überrollbügel eingenommenen Zone vorzusehen, die ästhetisch störend wirken können.

Durch die direkte Abstützung des Überrollbügels bzw. einer diesen aufnehmenden und führenden Kassette am Fahrzeugaufbau kann der Aufwand, der beim nächstliegenden Stand der Technik hinsichtlich der Festigkeit der Rückenlehnenstruktur, der Verstellelemente des gesamten Sitzes und an der Neigungsverstellung getrieben werden muß, entfallen.

Der naturgemäß eine hohe Stabilität aufweisende Überrollbügel kann bei bestimmten Belastungssituationen ferner die Kopfstütze sehr wirksam zusätzlich abstützen. Hierzu ist der Tragkörper für das Kopfstützenpolster in geeigneter Weise so zu gestalten, daß eine möglichst große Abstützbasis der Kopfstütze gegenüber dem oberen Abschnitt des Überrollbügels gewährleistet ist, auf der sich bei einer großen Belastung der Kopfstütze von vorne eine gute Kraftübertragung von der Kopfstütze auf den Überrollbügel ergibt.

Die Erfindung ist im folgenden anhand eines in der Zeichnung dargestellten Ausführungsbeispiels näher erläutert. Es zeigen:
- Fig. 1: einen vertikalen Längsschnitt durch die neue Kopfstütze mit dem oberen Abschnitt eines U-förmigen Überrollbügels und dem oberen Rückenlehnenbereich und
- Fig. 2: einen weiteren Schnitt in einer zur Schnittebene der Fig. 1 parallelen Ebene.

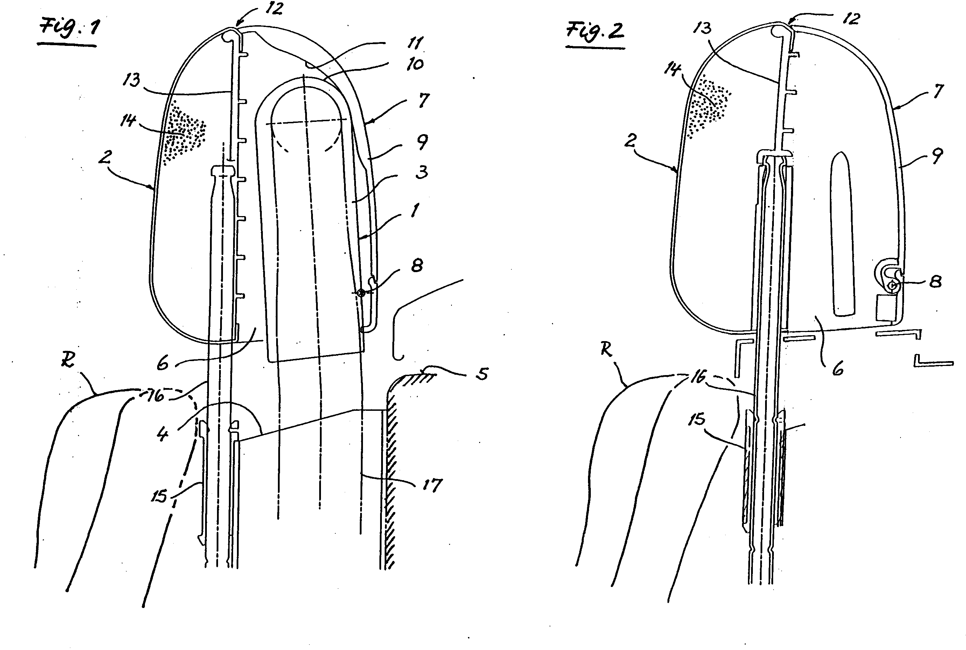

In Fig. 1 ist der U-förmige Überrollbügel 1 mit seinem oberen Abschnitt in einer Seitenansicht dargestellt. Er ist einem Fahrzeugsitz, im vorliegenden Ausführungsbeispiel einem mit seiner Rückenlehne R angedeuteten Fond-Sitz, zugeordnet. Oberhalb der Rückenlehne R dieses Fahrzeugsitzes befindet sich die Kopfstütze 2. Der in seinem oberen Bereich mit einer Polsterung 3 versehene Überrollbügel 1 ist in einer Kassette 4 geführt und abgestützt, die an dem Fahrzeugaufbau 5 befestigt ist.

Die Kopfstütze 2 und auch der Überrollbügel 1 sind also nicht über die Struktur der Rückenlehne R auf dem Fahrzeugboden, sondern über die Kassette 4 direkt am Fahrzeugaufbau 5 abgestützt.

Der Überrollbügel ist aus seiner in Fig. 1 dargestellten Ruhelage gesteuert durch einen Sensor, der einen Fahrzeug-Überschlag erkennt, aus seiner in Fig. 1 dargestellten Ruhelage durch geeignete Antriebselemente, beispielsweise vorgespannte Federn, in eine ausgefahrene Stützlage überführbar, in der er selbsttätig verriegelt wird.

Wie man in Fig. 1 erkennt, weist die Kopfstütze 2 eine nach unten offene Ausnehmung 6 auf, in der in Ruhestellung der Überrollbügel 1 mit seinem oberen Abschnitt aufgenommen ist.

Die Ausnehmung 6 ist zumindest in ihrem oberen Bereich mit einer lösbaren Abdeckung 7 verschlossen. Bei der bevorzugten Ausführungsform ist die Abdeckung 7 eine um eine Querachse 8 schwenkbare Klappe 9.

Wie man erkennt, ist die Schwenkachse 8 der Klappe 9 im unteren Bereich der Kopfstütze vorgesehen. Ferner weist die Klappe 9 in ihrem oberen Abschnitt zumindest im mittleren Bereich ihrer Breitenerstreckung eine mit dem oberen Quersteg 10 des U-förmigen Überrollbügels zusammenwirkende schräge Abweisfläche 11 auf. Bei dem dargestellten bevorzugten Ausführungsbeispiel ist die Abweisfläche 11 gekrümmt und läuft unten eng benachbart zu dem oberen Ende des Überrollbügels 1 annähernd vertikal aus. Die Klappe 9 ist in dem die Abweisfläche 11 aufweisenden Abschnitt verstärkt.

Die Klappe 9 kann über eine Aufreißzone 12 mit dem restlichen Körper der Kopfstütze 2 verbunden sein. Sie kann aber auch über (nicht dargestellte) Federklammern an dem restlichen Körper der Kopfstütze 2 gehalten werden.

Wird der Überrollbügel 1 aus der in Fig. 1 dargestellten Ruhelage nach oben beschleunigt, so gleitet er an der Abweisfläche 11 entlang. Durch die gewählte Krümmung der Abweisfläche 11 wird dem Überrollbügel 1 hierbei am Beginn seiner Bewegung wenig Widerstand entgegengesetzt, der aber infolge der gewählten Krümmung allmählich zunimmt, so daß die Aufreißzone 12 aufreißt bzw. die Federklammern nachgeben und die Klappe 9 um einen vorwählbaren Winkel nach hinten schwenkt. Der Überrollbügel 1 gelangt dann in seine nach oben über die Brüstung des Fahrzeugs vorstehende Stützlage, in der er durch einen geeigneten Rastmechanismus festgelegt wird.

Die Klappe 9 könnte auch über einen geeigneten Entriegelungsmechanismus von dem restlichen Kopfstützenkörper freigebbar sein. Zweckmäßig würde dann der Entriegelungsmechanismus durch den Überrollbügel 1 betätigbar sein.

Der in der Zeichnung lediglich angedeutete Tragkörper 13 der Kopfstütze 2 und deren Polsterkörper 14 sind vor der Ausnehmung 6 angeordnet. Die Kopfstütze 2 ist unabhängig vom Überrollbügel 1 auf die jeweils individuell gewünschte Höhe einstellbar. Wie schon weiter oben erwähnt, sind bei dem dargestellten Ausführungsbeispiel die Kopfstütze 2 und der Überrollbügel 1 einem rückwärtigen Fahrzeugsitz zugeordnet. Der Erfindungsgedanke könnte jedoch auch an einem vorderen Sitz eines Kraftfahrzeugs realisiert werden.

Die Führungen 15 für die Tragstangen 16 der Kopfstütze 2 sind an der am Fahrzeugaufbau 5 befestigten, die Bügelschenkel 17 des Überrollbügels 1 aufnehmenden und abstützenden Kassette 4 angeordnet. Die Führungen 15 und ihre Abstützung über die Kassette 4 am Fahrzeugaufbau 5 müssen so stabil sein, daß bei einem heftigen Aufprall des Kopfes keine so heftige, ggf. bleibende, Verlagerung der Kopfstütze 2 nach hinten erfolgt, daß die Ausfahrbewegung des Überrollbügels 1 behindert werden könnte. Andererseits kann sich die Kopfstütze 2 schon nach einer geringeren (elastischen) Verlagerung nach hinten wirkungsvoll an dem Überrollbügel 1 abstützen und somit die Sicherheit des Sitzbenutzers, beispielsweise bei einem Heckaufprall, noch weiter erhöhen. Eine plastische Deformation der Kopfstützenabstützung muß dabei vermieden werden.

Das neue Überrollschutzsystem einschließlich der Anordnung, Ausbildung und aufbaufesten Abstützung der Kopfstütze ermöglicht einen geringen Montageaufwand und ist daher kostengünstig. Trotzdem führt das System zu einer weiteren Erhöhung der Funktionssicherheit und erlaubt Verbesserungen im Design.

## Patentansprüche

1. Überrollschutzsystem für einen Personenkraftwagen, insbesondere für ein Cabriolet, mit einer einem Fahrzeugsitz zugeordneten Kopfstütze und einem zumindest annähernd translatorisch aus einer abgesenkten Ruhelage nach oben in eine Stützlage verlagerbaren Überrollbügel, der in Ruhelage mit seinem oberen Abschnitt in die Kopfstütze des Fahrzeugsitzes integriert ist,
dadurch gekennzeichnet, daß die Kopfstütze (2) eine nach unten offene Ausnehmung (6) aufweist, in der in Ruhestellung der Überrollbügel (1) mit seinem oberen Abschnitt aufgenommen ist.

2. Überrollschutzsystem nach Anspruch 1,
dadurch gekennzeichnet, daß der Überrollbügel (1) mit seinen Verstell-und Führungselementen direkt am Fahrzeugaufbau (5) angeordnet ist.

3. Überrollschutzsystem nach Anspruch 1 oder 2,
dadurch gekennzeichnet, daß die Kopfstütze (2) und der Überrollbügel (1) einem rückwärtigen Fahrzeugsitz zugeordnet sind.

4. Überrollschutzsystem nach Anspruch 1 oder 2,
dadurch gekennzeichnet, daß die Führungen (15) für wenigstens eine Tragstange (16) der Kopfstütze (2) an einer am Fahrzeugaufbau (5) befestigten, die Bügelschenkel (17) des U-förmigen Überrollbügels (1) aufnehmenden und abstützenden Kassette (4) angeordnet sind.

5. Überrollschutzsystem nach Anspruch 1,
dadurch gekennzeichnet, daß die den Überrollbügel (1) aufnehmende Ausnehmung (6) der Kopfstütze (2) zumindest in ihrem oberen Bereich mit einer lösbaren Abdeckung (7) verschlossen ist.

6. Überrollschutzsystem nach Anspruch 5,
dadurch gekennzeichnet, daß die Abdeckung (7) eine um eine Querachse (8) schwenkbare Klappe (9) ist.

7. Überrollschutzsystem nach Anspruch 6,
dadurch gekennzeichnet, daß die Schwenkachse (8) der Klappe (9) im unteren Bereich der Kopfstütze (2) vorgesehen ist.

8. Überrollschutzsystem nach Anspruch 6,
dadurch gekennzeichnet, daß die Klappe (9) in ihrem oberen Abschnitt eine mit dem Quersteg (10) des U-förmigen Überrollbügels zusammenwirkende schräge Abweisfläche (11) aufweist.

9. Überrollschutzsystem nach Anspruch 8,
dadurch gekennzeichnet, daß die Abweisfläche (11) gekrümmt ist und unten annähernd vertikal ausläuft.

10. Überrollschutzsystem nach Anspruch 8,
dadurch gekennzeichnet, daß die Klappe (9) in dem die Abweisfläche (11) aufweisenden Abschnitt verstärkt ist.

11. Überrollschutzsystem nach Anspruch 5 oder 6,
dadurch gekennzeichnet, daß die Abdeckung (7) bzw. die Klappe (9) über eine Aufreißzone (12) mit dem restlichen Kopfstützenkörper verbunden ist.

12. Überrollschutzsystem nach Anspruch 5 oder 6,
dadurch gekennzeichnet, daß die Abdeckung (7) bzw. die Klappe (9) über einen Entriegelungsmechanismus gegenüber dem restlichen Kopfstützenkörper freigebbar ist.

13. Überrollschutzvorrichtung nach Anspruch 12,
dadurch gekennzeichnet, daß der Entriegelungsmechanismus durch den Überrollbügel (1) betätigbar ist.

14. Überrollschutzvorrichtung nach Anspruch 1,
dadurch gekennzeichnet, daß der Tragkörper (13) und der Polsterkörper (14) der Kopfstütze (2) vor der Ausnehmung (6) angeordnet sind.

15. Überrollschutzsystem nach Anspruch 1,
dadurch gekennzeichnet, daß die Kopfstütze (2) unabhängig vom Überrollbügel (1) in der Höhe verstellbar ist.

## Claims

1. A roll over protection system for a passenger motor vehicle, especially for a cabriolet, with a head restraint arranged on a vehicle seat and a roll bar at least almost instantaneously transferable from a lowered rest position upwards into a support position, whose upper section is integrated into the head restraint in the rest position,
characterised in that the head restraint (2) has an cut-out open below in which the upper section of the roll bar (1) is accepted in its rest position.

2. A roll over protection system according to Claim 1,
characterised in that the adjustment and guiding elements of the roll bar (1) are arranged directly onto the vehicle body (5).

3. A roll over protection system according to claim 1 or claim 2,
characterised in that the head restraint (2) and the roll bar (1) are arranged in a rear seat of a vehicle.

4. A roll over protection system according to claim 1 or claim 2,
characterised in that the guides (15) for at least one bearing rod (16) of the head restraint (2) are arranged on a cassette (4) fastened to the vehicle body (5) accepting and supporting the upright arm of the U-shaped roll bar (1).

5. A roll over protection system according to Claim 1,
characterised in that the cut-out (6) in the head restraint (2), which accepts the roll bar (1) is closed at least in its upper region by a removable covering (7).

6. A roll over protection system according to Claim 5,
characterised in that the covering (7) is a flap (9) which can pivot about a lateral pivot axis (8).

7. A roll over protection system according to Claim 6,
characterised in that the pivot axis (8) of the flap (9) is provided in the lower part of the head restraint (2).

8. A roll over protection system according to Claim 6,
characterised in that the flap (9) has an oblique deflecting surface (11) in its upper section, working with the cross arm (10) of the U-shaped roll bar.

9. A roll over protection system according to Claim 8,
characterised in that the deflecting surface (11) is curved and runs almost vertically at the bottom.

10. A roll over protection system according to Claim 8,
characterised in that the flap (9) is strengthened in the section which includes the deflecting surface (11).

11. A roll over protection system according to Claim 5 or Claim 6,
characterised in that the covering (7) or the flap (9) is joined to the rest of the head restraint body by a rear-off zone (12).

12. A roll over protection system according to Claim 5 or Claim 6,
characterised in that the covering (7) or the flap (9) can be released from the rest of the head restraint body by an unlocking mechanism.

13. A roll over protection system according to Claim 12,
characterised in that the unlocking mechanism can be operated by the roll bar (1).

14. A roll over protection system according to Claim 1,
characterised in that the bearing body (13) and the padding body (14) of the head restraint (2) are arranged in front of the cut out (6).

15. A roll over protection system according to Claim 1,
characterised in that the head restraint (2) can be adjusted in height independently from the roll bar (1).

## Revendications

1. Système de protection au retournement pour un véhicule à moteur particulier, en particulier pour un cabriolet, comprenant un appui-tête associé à un siège du véhicule, et un arceau de sécurité, que l'on peut déplacer par translation, du moins à peu près, à partir d'une position de repos enfoncée, vers le haut dans une position de soutien, arceau de sécurité qui est intégré en position de repos par sa section supérieure dans l'appui-tête du siège du véhicule, caractérisé en ce que
l'appui-tête (2) présente un évidement (6) ouvert vers le bas, dans lequel en position de repos est reçu l'arceau de sécurité (1) par sa section supérieure.

2. Système de protection au retournement, selon la revendication 1,
caractérisé en ce que
l'arceau de sécurité (1) est disposé avec ses éléments de réglage et de guidage directement sur la carrosserie du véhicule (5).

3. Système de protection au retournement, selon la revendication 1 ou 2,
caractérisé en ce que
l'appui-tête 2 et l'arceau de sécurité (1) sont associés à un siège arrière du véhicule.

4. Système de protection au retournement, selon la revendication 1 ou 2,
caractérisé en ce que
les guides (15) pour au moins une tige de support (16) de l'appui-tête (2) sont disposés sur un caisson (4), qui est fixé sur la carrosserie du véhicule (5), et qui reçoit et soutient les branches (17) de l'arceau de sécurité (1) en forme d'U.

5. Système de protection au retournement, selon la revendication 1,
caractérisé en ce que
l'évidement (6) de l'appui-tête (2), qui reçoit l'arceau de sécurité (1), est fermé, du moins dans sa zone supérieure, par un recouvrement amovible (7).

6. Système de protection au retournement, selon la revendication 5,
caractérisé en ce que
le recouvrement (7) est un volet (9), qui peut pivoter autour d'un axe transversal (8).

7. Système de protection au retournement, selon la revendication 6,
caractérisé en ce que
l'axe de pivotement (8) du volet (9) est prévu dans la zone inférieure de l'appui-tête (2).

8. Système de protection au retournement, selon la revendication 6,
caractérisé en ce que
le volet (9) présente dans sa section supérieure une surface de repoussage (11), qui coopère avec la traverse (10) de l'arceau de sécurité en forme d'U.

9. Système de protection au retournement, selon la revendication 8,
caractérisé en ce que
la surface de repoussage (11) est recourbée et s'étend en bas à peu près verticalement.

10. Système de protection au retournement, selon la revendication 8,
caractérisé en ce que
le volet (9) est renforcé dans la section qui présente la surface de repoussage (11).

11. Système de protection au retournement, selon la revendication 5 ou 6,
caractérisé en ce que
le recouvrement (7) ou le volet (9) est relié par l'intermédiaire d'une zone d'arrachement (12) avec le reste de l'appui-tête.

12. Système de protection au retournement, selon la revendication 5 ou 6,
caractérisé en ce que
le recouvrement (7) ou le volet (9) peut être libéré par l'intermédiaire d'un mécanisme de déverrouillage par rapport au reste du corps de l'appui-tête.

13. Système de protection au retournement, selon la revendication 12,
caractérisé en ce que
le mécanisme de déverrouillage peut être actionné par l'arceau de sécurité (1).

14. Système de protection au retournement, selon la revendication 1,
caractérisé en ce que
le corps de support (13) et le corps de rembourrage (14) de l'appui-tête (2) sont disposés devant l'évidement (6).

15. Système de protection au retournement, selon la revendication 1,
caractérisé en ce que
l'appui-tête (2) peut être réglé en hauteur indépendamment de l'arceau de sécurité (1).
